# EUROPEAN PATENT SPECIFICATION

(11) **EP 3 332 855 B1**
(45) Date of publication and mention of the grant of the patent: **05.12.2018**
(21) Application number: 17203566.9
(22) Date of filing: 24.11.2017
(51) Int. Cl.: B01D 35/06, B01D 35/153, B01D 29/35

(54) **FILTRATION AND DIRT-SEPARATION DEVICE**
FILTER- UND SCHMUTZABSCHEIDEANLAGE
DISPOSITIF DE FILTRATION ET DE SÉPARATION DES SALETÉS

(30) Priority: 25.11.2016 IT 201600119549
(43) Date of publication of application: 13.06.2018
(73) Proprietor: Euroacque S.r.l., 29029 Rivergaro PC (IT)
(72) Inventor: BORDI, Paolo, 29122 Piacenza PC (IT)
(74) Representative: Barbaro, Gaetano

(56) References cited:
- WO-A1-00/71897
- WO-A1-96/04062
- US-A- 4 615 800

## Description

### Technical field of the invention

The present invention generally relates to water filtration devices and in particular to a filtration and dirt-separation device.

### Background

Filtration and dirt separation devices are known in the field of water filtration devices. These devices are typically employed to remove impurities such as dirt and iron residues from water made to recirculate in heating and conditioning circuits, e.g. in house boilers having radiator assemblies, panel assemblies, fan coils and the like.

A filtration and dirt separation device generally comprises a main body made of a plastic material or of a metal material such as brass, and a cup-shaped container wherein a filter cartridge may be optionally accommodated, for example a cylindrical shaped cartridge. The cup-shaped container is removably mounted on the main body, for example by way of a threaded nut associated with a flange having a sealing element.

The main body is configured to be mounted in a line with a hydraulic piping, for example by way of threaded nuts. The main body comprises an inlet conduit that allows to divert an incoming water flow towards the cup-shaped container with its possible filter cartridge so as to remove impurities, and an outlet conduit that receives a flow of water coming from the cup-shaped container and its possible filter cartridge in order to allow it to enter the hydraulic piping downstream of the filtration and dirt-separation device.

Filtration and dirt-separation devices may advantageously comprise magnets arranged inside the filter cartridge, if present, for example coaxially thereto, and adapted to promote collection of ferrous impurities.

In order to carry out cleaning and maintenance of a filtration and dirt-separation device, it is necessary to disassemble the cup-shaped container from the main body and to remove the impurities accumulated inside it. Is it also necessary to disassemble the filter cartridge if this is provided inside the cup-shaped container. In order to carry out these operations, the filtration and dirt separation device must be temporarily isolated from the hydraulic piping and to this aim two valves are typically used. A first valve is positioned upstream of the main body of the filtration and dirt separation device with respect to a flow direction and serves to prevent water from entering the device. A second valve is arranged downstream of the main body of the filtration and dirt separation device with respect to the flow direction and serves to prevent water coming from a hydraulic appliance, e.g. a boiler, from entering the device thus emptying the hydraulic circuit of the appliance.

Known filtration and dirt-separation devices comprise a flow-diverting valve arranged inside the main body and configured to allow to close both the inlet and outlet conduits by performing a single operation, thus simplifying and reducing the number of maneuvering actions required to carry out maintenance of a filtration and dirt-separation device.

A filtration device of this type is described in patent US 3935106 according to which the flow-diverting valve is a substantially cylindrical rotor comprising internal channels suitable to allow fluid communication between a water inlet conduit formed in the main body and a filter cartridge, as well as between the filter cartridge and a water outlet conduit formed in the main body.

The rotor-shaped flow-diverting valve is accommodated atop the main body in a suitable seat that is formed therein and communicates with the inlet and outlet conduits. The flow-diverting valve is axially restrained by a ring screwed on the main body. O-ring seals provide hydraulic tightness between the flow-diverting valve and the main body.

The flow-diverting valve of the above-mentioned filtering device may further comprise an additional internal channel configured to define a "by-pass" position wherein a direct connection is established between the inlet conduit and the outlet conduit formed in the main body, while hydraulically isolating the cartridge filter. This allows to carry out cleaning and maintenance operations without interrupting the water flow in the hydraulic piping.

Another example of a filtering device of the same type is described in patent US 4379053. In this case the flow-diverting valve is accommodated in the main body in a seat formed by boring it from side to side, i.e. transversely with respect to the direction of the water flow.

The flow-diverting valve comprises a pair of cylindrical elements disposed at opposite ends and a cylindrical central body extending axially between said cylindrical elements. The central body is hollow and is configured to receive a rotation axis allowing to maneuver the valve. A sealing element having the shape of a circular crown in cross section is restrained to the central body. The sealing element extends throughout the length of the central body.

By rotating the flow-diverting valve relative to the main body it is possible to direct a water flow towards the filter cartridge so as to define a normal operation condition of the filtration and dirt separation device, as well as to block the water flow entering the inlet conduit so as to carry out maintenance operations, or to guide the water flow entering the inlet conduit directly into the outlet conduit thus isolating the filter cartridge in order to carry out maintenance operations without interrupting the water flow inside the hydraulic piping.

In order to prevent drainage of a hydraulic appliance mounted downstream of the filtration and dirt separation device during maintenance operations, the filtration and dirt separation device comprises a one-way valve associated with the outlet conduit formed in the main body. In a normal operation condition of the filtration and dirt separation device, the one-way valve is opened by the pressure of the water flow coming out from the filter cartridge, while a possible flow of water coming from the outlet conduit causes the one-way valve to close.

Also in this case O-ring seals provide hydraulic tightness between the flow-diverting valve and the main body.

The international publication WO 96/04062 A1 describes a filtration device comprising a main body having an inlet conduit, an outlet conduit, and a bypass channel. A three-way flow-diverting valve is housed in the main body. The valve can be rotated by way of a lever so as to define a filtration position, a by-pass position, and a closing position. The filtration device further comprises two one-way valves arranged so as to regulate the flow of a fluid in the filtration condition and in the by-pass condition, as well as to prevent fluid flow coming from the outlet conduit to enter the main body.

The filtration devices mentioned above, which are provided with a single flow-diverting valve having multiple operating positions, may be improved as far as the structures of the main body and of the flow-diverting valve are concerned, which are often complex and expensive.

Hydraulic tightness may also be improved, because the configuration and arrangement of the flow-diverting valves requires the use of various sealing elements in order to prevent fluid leakages from the main body through the valve seats.

WO 00/71897 discloses a pipeline arrangement in a heating installation, provided with at least one filter in order to prevent damage and blockages caused by corrosion. The allocated main pipeline section of said filter is connected parallel to a bypass pipe.

US 4,615,800 discloses a filter apparatus which provides for a first primary filter path and a second path for secondary filtration. The first path includes a shutoff valve on one side of the primary filter and a check valve on the downstream side. The second path includes a regulating bypass valve on the upstream side of the secondary filter and a check valve on the downstream side. The regulating bypass valve gradually shifts fluid flow from the first path to the second path when differential pressure across the primary filter increases beyond a predetermined level. A reservoir return bypass valve directs fluid flow gradually from the secondary filter when differential pressure across the secondary filter increases beyond a predetermined level.

### Summary of the invention

The technical problem underlying and solved by the present invention is therefore to provide a filtration and dirt separation device suitable to overcome the drawbacks mentioned above with reference to the prior art.

This problem is solved by a device according to claim 1.

Preferred features of the present invention are specified in the dependent claims.

An idea of solution underlying the invention is to provide a filtration and dirt separation device whose general structure is based on the structure of the filtration device described in the patent US 3935106 discussed above, but wherein, similarly to the filtration device described in the international publication WO 96/04062 A1, the flow-diverting valve is housed inside the main body and is accommodated in a seat in fluid communication with the inlet conduit, the cup-shaped container and the outlet conduit. The flow-diverting valve is a three way valve housed in a movable way in its seat and includes channels suitable to allow fluid communication selectively between the inlet conduit and the cup-shaped container, and hence the filter cartridge if present, or directly between the inlet conduit and the outlet conduit. Thanks to these features the overall configuration of the filtration and dirt separation device is more robust and compact than prior art filtration devices, because the flow-diverting valve is completely housed inside the main body and is not fitted into an outer seat and locked therein by way of rings, screws and similar mounting means.

According to the invention the filtration and dirt separation device further comprises a first one-way valve arranged at the end of the outlet conduit which is in fluid communication with the cup-shaped container, and a second one-way valve arranged at the end of the outlet conduit intended to be connected to a hydraulic appliance. The flow-diverting valve, the first one-way valve and the second one-way valve are arranged so as to define three different operating conditions:
a) a first, filtering condition whereby a fluid enters the inlet conduit, passes through the cup-shaped container and exits the outlet conduit;
b) a second, by-pass condition whereby a fluid enters the inlet conduit and proceeds directly into the outlet conduit without crossing the cup-shaped container;
c) a third, closing condition whereby a fluid is stopped in the inlet conduit without being able to flow into the cup-shaped container or into the outlet conduit.

In other words, the arrangement of the flow-diverting valve and of the two one-way valves is such that in the filtering condition the fluid opens and flows through both one-way valves, while in the by-pass condition the fluid opens and flows through the one-way valve that is in fluid communication with a hydraulic appliance, while the other one-way valve is closed by the fluid itself. Finally, in the closing condition, the flow-diverting valve closes the inlet conduit, while the one-way fluid that is in fluid communication with a hydraulic appliance prevents ingress of fluid from the outlet conduit into the body of the filtration and dirt separation device, and thus prevent drainage of the hydraulic appliance.

According to a preferred embodiment of the invention, the flow-diverting valve is a spherical-shaped valve comprising a first through channel extending diametrically and a second channel blind at one end, which extends perpendicularly from the first through channel.

The seat of the spherical valve is formed as a shoulder at the bottom of the inlet conduit, where this fluidly communicates with the outlet conduit.

Two annular sealing elements made of a low-friction material, e.g. PTFE, are arranged in the seat of the flow-diverting valve and contact the valve. The flow-diverting valve is fitted into the main body of the filtration and dirt separation device through the inlet conduit and locked in the seat by the annular sealing elements by way of a threaded nut.

Thanks to these features, the sealing elements associated with the flow-diverting valve are housed with it inside the main body of the filtration and dirt separation device, thus eliminating the sealing problems affecting prior art filtration devices.

Further advantages and features, as well as operation modes of the present invention will become clear from the following detailed description of some embodiments thereof, disclosed for exemplifying and non-limiting purposes.

### Brief description of the drawings

Reference will be made in the following to the attached drawings, wherein:
- Figure 1 is a perspective, partially sectional view showing a filtration and dirt separation device according to the invention;
- Figure 1a shows a detail of figure 1;
- Figure 2 is a partial, longitudinal sectional view of the filtration and dirt separation device of figure 1;
- Figures 3a to 3c are perspective, partially sectional views schematically showing three operating positions of the flow-diverting valve of the filtration and dirt separation device according to the invention;
- Figures 4a to 4c are longitudinal sectional views respectively showing the three operating positions of figures 3a to 3c and schematically showing the flow of water within the filtration and dirt separation device according to the invention;
- Figures 5a to 5c are partial, longitudinal sectional views respectively showing the three operating positions of figures 3a to 3c and schematically showing the flow of water within the filtration and dirt separation device according to the invention.

### Detailed description of preferred embodiments

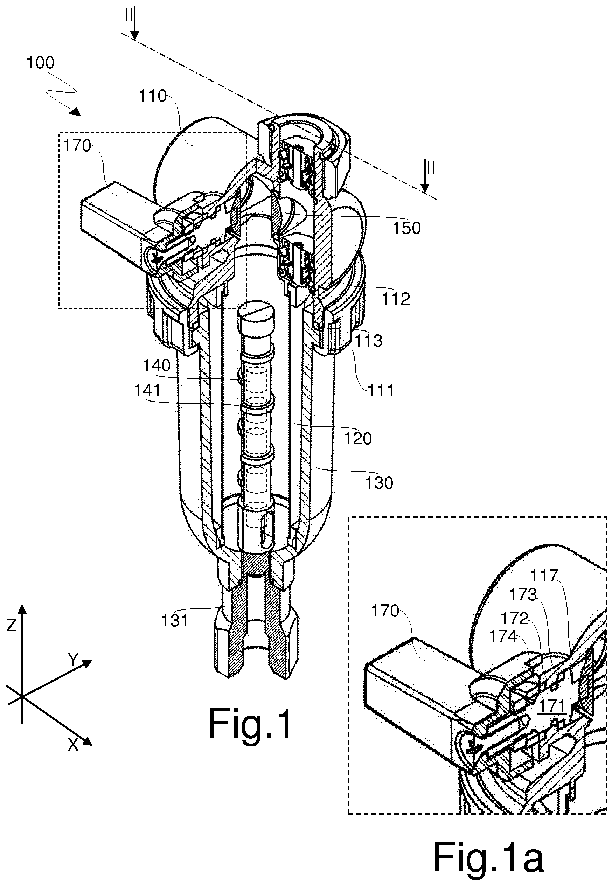

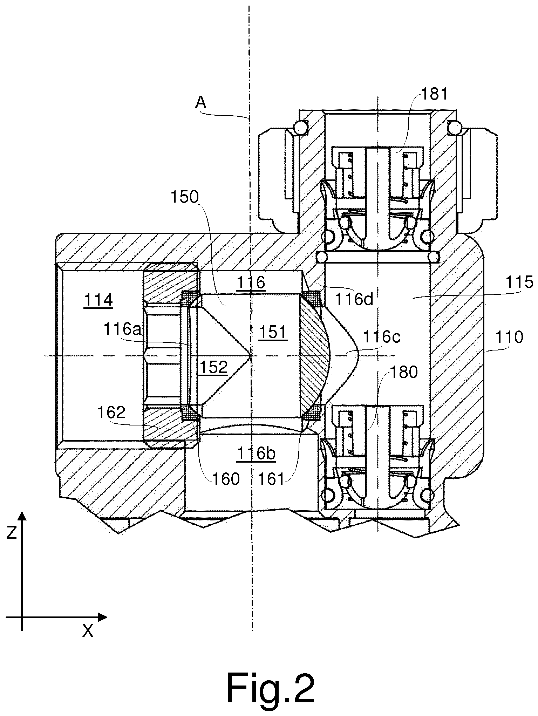

By initially referring to figures 1 and 2, a filtration and dirt separation device according to the invention is generally indicated by reference numeral 100 and is shown in a triaxial reference system wherein a first direction X and a second direction Y that are perpendicular to each other define a horizontal plane, while a third direction Z represents a direction perpendicular to the horizontal plane along which the force of gravity acts.

The filtration and dirt separation device 100 comprises a main body 110 made, for example, of a metal material such as brass, or a plastic material. The filtration and dirt separation device may optionally comprise a generally cylindrical-shaped filter cartridge 120 housed in a suitable cup-shaped container 130 that is removably mounted on the main body 110, e.g. by way of a ring nut 111 associated with a flange 112 provided with a sealing element 113.

In the following, reference will be made to a filtration and dirt separation device 100 that is provided with a filter cartridge. However, it will be understood that the presence of a filter cartridge 120 is advantageous in that it allows to hold impurities more efficiently, but it is not an essential feature of the filtration and dirt separation device 100 according to the invention, because impurities spontaneously tend to remain inside the cup-shaped container 130 when the flow rates and heads are low.

The main body 110 is configured to be connected to a hydraulic piping (not shown), for example by way of threaded connections, and includes an inlet conduit 114 which directs a water flow entering the filtration and dirt separation device 100 towards the cup-shaped container 130 and the filter cartridge 120 so as to allow to remove the impurities. The main body 110 also comprises an outlet conduit 115 which receives a flow of water from the cup-shaped container 130 with the filter cartridge 120, thus allowing water to re-enter the hydraulic piping.

In the illustrated embodiment, the inlet conduit 114 and the outlet conduit 115 are perpendicular to each other, which allows to limit the size of the main body 110 and to ease assembly of the filtration and dirt separation device close to a hydraulic appliance such as a domestic boiler.

More particularly, the inlet conduit 114 extends in the horizontal direction X, while the outlet conduit 115 extends in the vertical direction Z.

The filter cartridge 120 and the cup-shaped container 130 are mounted under the main body 110 with respect to the vertical direction Z, which facilitates collection of sludge and ferrous impurities.

The filtration and dirt separation device 100 further comprises a set of magnets 140, such as neodymium magnets, which promote collection of ferrous impurities inside the filter cartridge 120. In the illustrated embodiment the magnets 140, schematically shown by way of broken lines, are arranged coaxially to the filter cartridge 120 in a suitable plastic container 141 fixed to the bottom of the cup-shaped container 130.

The filtration and dirt separation device 100 also comprises a flow-diverting valve 150.

According to the invention, the flow-diverting valve 150 is housed inside the main body 110 in a suitable seat 116 that is set in fluid communication with the inlet conduit 114, the cup-shaped container 130, where the filter cartridge 120 is housed, as well as with the outlet conduit 115 through respective openings 116a, 116b, 116c.

In the illustrated embodiment, the flow-diverting valve 150 is a spherical ball valve rotatably accommodated in the seat 116.

Two ring-shaped sealing elements 160, 161 made of a low-friction material, for example PTFE, are arranged in the seat 116. The surfaces of the sealing elements 160, 161 in contact with the valve 150 are spherical shaped and match its spherical shape.

The seat 116 is formed as a shoulder 116d at the end of the inlet conduit 114 in fluid communication with the outlet conduit 115 and the cup-shaped container 130. The valve 150 is fitted into the main body 110 through the inlet conduit 114 and locked at the seat 116 with the sealing elements 160, 161 by means of a threaded nut 162.

It will be appreciated that, unlike prior art filtration and dirt separation devices, the provision of a flow-diverting valve 150 that is fully arranged inside the main body 110 makes the filtration and dirt separation device of the invention much more compact and versatile than those currently available on the market. The arrangement of the sealing elements is also an improvement over the arrangement of the sealing elements associated with flow-diverting valves of prior art filtration devices. In fact, the sealing elements are housed together with the flow-diverting valve inside the main body, thus avoiding any leakage to the outside.

The valve 150 may be operated by way of an actuating lever 170 connected thereto by a shaft 171 attached to its spherical body. The shaft 171 is rotatably housed in a seat 117 formed in the main body 110 perpendicularly to the inlet conduit 114, more particularly in the Y direction of the triaxial reference system of figure 1. In order to prevent fluid from leaking through the seat 117, an O-ring sealing element 172 is fitted on the insert 171 and associated with a pair of annular-shaped sealing elements 173, 174 made of a low-friction material such as PTFE.

With particular reference to figure 2, the valve 150 comprises a first through channel 151 extending diametrically and a second channel 152 that has a blind end and branches off perpendicularly from the first through channel 151. In other words, the two channels form a T-shaped cavity within the flow-diverting valve 150.

This configuration of the valve 150 allows to selectively establish fluid communication between the inlet conduit 114 and the cup-shaped container 130, and hence the filter cartridge 120, or with the outlet conduit 115 by simply rotating the actuating lever 170 by 90°.

It will be appreciated that, even though the spherical shape of the flow-diverting valve 150 is preferred because of its compact size and structural simplicity, this shape is not binding for the invention. More generally in fact the flow-diverting valve is configured and operates as a three-way valve movable in a seat formed within the main body 110 and having a shape matching the shape of the valve.

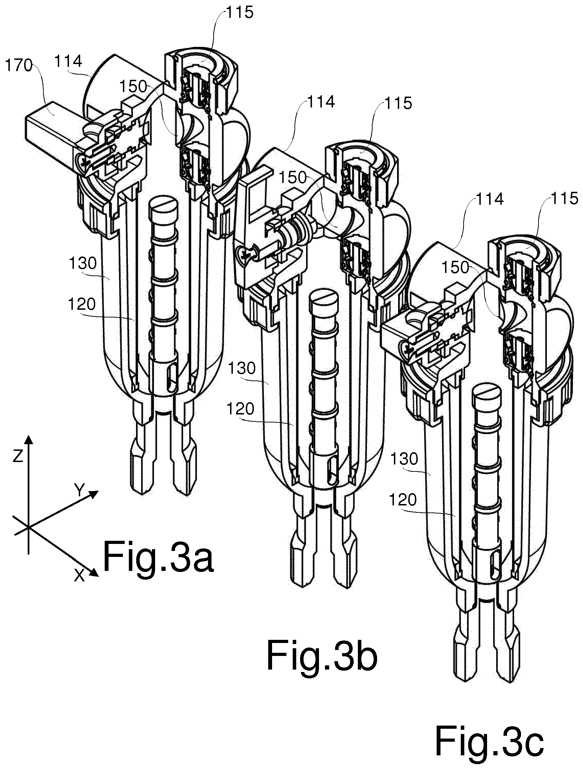

With particular reference to figures 3a, 4a and 5a, in a first operating condition, which represents a normal operation condition of the filtration and dirt separation device 100, a flow of water entering the inlet conduit 114 reaches the outlet conduit 115 passing through the filter cartridge 120.

To this end, the flow-diverting valve 150 is arranged such that an inlet of the second, blind 152 channel faces the inlet conduit 114 and such that the first through channel 151, which is perpendicular to the second channel 152, is set in fluid communication with the cup-shaped container 130. The blind end of the second channel 152 instead separates the inlet conduit 114 from the outlet conduit 115.

It will therefore be clear that a water flow F entering the inlet conduit 114 crosses the second channel 152 of the valve 150, is diverted at right angles into the first channel 151 and reaches the cup-shaped container 130 through the latter in the Z direction.

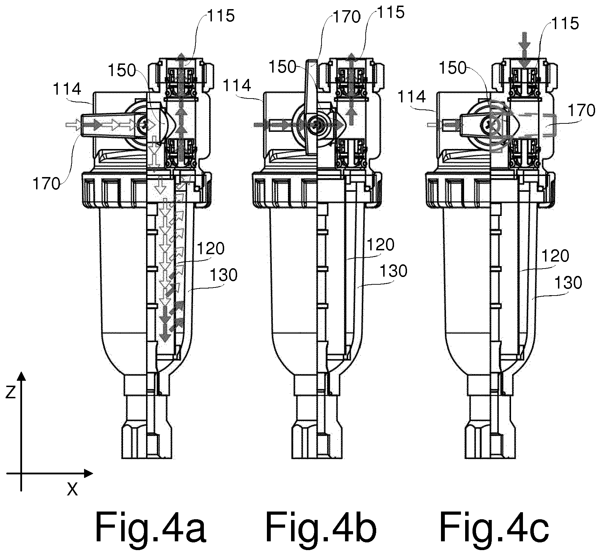

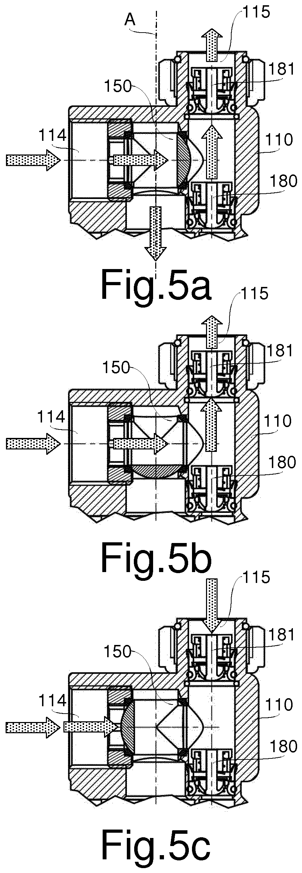

The arrows in figures 4a and 5a schematically show the water flow from the inlet conduit 114 to the outlet conduit 115.

In the illustrated embodiment, the valve 150 is aligned with an axis A of the cup-shaped container 130 and the filter cartridge 120, whereby the incoming water flow F is received within the filter cartridge 120, where the magnets 140 are arranged.

The purified water flow F coming out radially from the openings of the filter cartridge 120 reaches the outlet conduit 115 and flows out of the main body 110 in order to reach a hydraulic appliance, such as a boiler, connected to the filtration and dirt separation device 100.

At the end of the outlet conduit 115 facing the cup-shaped container 130, a one-way valve 180 is provided, for example a conical type one-way valve, and is arranged so as to be opened when urged by a flow of water coming from the cup-shaped container 130 and directed towards the outlet conduit 115, and to be closed when urged by a flow of water coming from the outlet conduit 115.

With reference to figures 3b, 4b, and 5b, in a second operating condition whereby the filter cartridge 120 is by-passed, a water flow F entering the inlet conduit 114 reaches the outlet conduit 115 directly without crossing the filter cartridge 120. For this purpose, by actuating the actuating lever 170, the flow-diverting valve 150 is arranged such that the first channel 151 is aligned with the inlet conduit 114 and the second channel 152, perpendicular to the first channel 151, has the blind end facing the cup-shaped container 130.

When flowing through the outlet conduit 115, the one-way valve 180 is closed due to the pressure of the water flow F, thereby hydraulically separating the cup-shaped container 130 from the main body 110.

The arrows in figures 4b and 5b schematically show the path of the water flow from the inlet conduit 114 to the outlet conduit 115.

In this second operating condition, it is possible to disassemble the cup-shaped container 130 from the main body 110 so as to clean the filter cartridge 120 or to replace it.

At the bottom of the cup-shaped container 130, an exhaust valve 131, such as a ball valve, is advantageously mounted so as to allow to empty the cup-shaped container 130 before carrying out maintenance operations.

The configuration of the flow-diverting valve 150 described above also allows the filtration and dirt separation device 100 to be set in a third operation condition whereby a water flow F is blocked in the inlet conduit 114 thus interrupting water supply to the hydraulic appliance.

To this end, by maneuvering the actuating lever 170 the flow-diverting 150 is rotated in an opposite position relative to position corresponding to the normal operation of the filtration and dirt separation device, i.e. such that the blind end of the second channel 152 faces the inlet conduit 114 and that the first through channel 151, perpendicular to the second channel 152, is aligned with the inlet conduit 114. This prevents a water flow F from reaching the hydraulic appliance connected to the filtration and dirt separation device 100.

In order to prevent drainage of the hydraulic appliance through the filtration and dirt separation device 100 during maintenance operations, and more generally that the water contained in a hydraulic circuit of the hydraulic appliance pressurizes the main body 110 with potential risks to the sealing elements, the filtration and dirt separation device 100 is advantageously provided with a second one-way valve 181 arranged in the outlet conduit 115.

The second one-way valve 181 is mounted at the end of the outlet conduit 115 intended to connected to the hydraulic appliance and is arranged so as to be opened when urged by a flow of water coming from the cup-shaped container 130 or directly from the inlet conduit 114, and to be closed when urged by a flow of water coming in the opposite direction, i.e. entering the outlet conduit 115.

As schematically indicated by the arrows in figures 4c and 5c, by rotating the flow-diverting valve such that the blind end of the second channel 152 faces the inlet conduit 114, there is no flow of water through the filtration and dirt separation device 100 and the outlet conduit 115 is closed by the second one-way valve 181, which is subjected to the pressure of the water contained in the hydraulic circuit of the hydraulic appliance.

In light of the above, it will be appreciated that the flow-diverting valve 150 and the two one-way valves 180, 181 are arranged such that they define three different operating conditions of the filtration and dirt separation device 100:
a) a first filtration condition whereby the flow-diverting valve 150 prevents fluid communication from the inlet conduit 114 to the outlet conduit 115 and allows fluid communication from the inlet conduit 114 to the cup-shaped container 130, and whereby fluid flows from the inlet conduit 114 through the cup-shaped container 130, the first one-way valve 180, the second one-way valve 181 and finally through the outlet conduit 115;
b) a second by-pass condition whereby the flow-diverting valve 150 prevents fluid communication to the cup-shaped container 130 and allows fluid communication from the inlet conduit 114 to the outlet conduit 115, whereby fluid flows from the inlet conduit 114 through the second one-way valve 181 and the outlet conduit 115, while the first one-way valve 180 prevents the fluid from flowing from the main body 110 into the cup-shaped container 130;
c) a third closing condition whereby the flow-diverting valve 150 prevents fluid communication from the inlet conduit 114 to the main body 110, while the second flow-diverting valve 181 prevents fluid communication from the outlet conduit 115 to the main body 110.

The present invention has been disclosed with reference to preferred embodiments thereof. It will be appreciated that further embodiments associated with the same inventive idea may exist, as defined by the scope of protection of the claims set forth below.

## Claims

1. A filtration and dirt separation device (100) comprising:
i) a main body (110) wherein an inlet conduit (114), intended to receive a water flow (F) entering the filtration and dirt separation device (100), and an outlet conduit (115), intended to receive a water flow (F) leaving the filtration and dirt separation device (100), are formed;
ii) a cup-shaped container (130) that is removably restrained to said main body (110), said cup-shaped container (130) for housing a filter cartridge (120);
iii) a flow-diverting valve (150) that is movably accommodated inside the main body (110) in a seat (116) that is in fluid communication with said inlet conduit (114), said cup-shaped container (130) and said outlet conduit (115), said flow-diverting valve (150) being a three-way valve comprising channels (151, 152) adapted to selectively set the inlet conduit (114) in fluid communication with the cup-shaped container (130), or with the outlet conduit (115) depending on its position in said seat (116),
iv) a first one-way valve (180) that is arranged at the end of the outlet conduit (115) that fluidly communicates with the cup-shaped container (130),
v) a second one-way valve (181) that is arranged at the end of the outlet conduit (115) that is intended to be connected to a hydraulic appliance,
**characterized in that** the flow-diverting valve (150), the first one-way valve (180) and the second one-way valve (181) are arranged such that the following operating conditions are defined:
a) a first, filtration, condition whereby the flow-diverting valve (150) prevents fluid communication from the inlet conduit (114) to the outlet conduit (115) and allows fluid communication from the inlet conduit (114) to the cup-shaped container (130), and whereby fluid flows from the inlet conduit (114) through the cup-shaped container (130), the first one-way valve (180), the second one-way valve (181) and finally through the outlet conduit (115);
b) a second, by-pass, condition according to whereby the flow-diverting valve (150) prevents fluid communication to the cup-shaped container (130) and allows fluid communication from the inlet conduit (114) to the outlet conduit (115), whereby fluid flows from the inlet conduit (114) through the second one-way valve (181) and the outlet conduit (115), while the first one-way valve (180) prevents the fluid from flowing from the main body (110) into the cup-shaped container (130);
c) a third, closing, condition whereby the flow-diverting valve (150) prevents fluid communication from the inlet conduit (114) to the main body (110), while the second flow-diverting valve (181) prevents fluid communication from the outlet conduit (115) to the main body (110).

2. A filtration device (100) according to claim 1, wherein the flow-diverting valve (150) is a spherical valve rotatably accommodated inside the main body (110), and wherein said spherical valve comprises a first, diametrically extending through-channel (151) and a second channel (152) blind at one end that branches off perpendicularly to the first through-channel (151).

3. A filtration device (100) according to claim 2, further comprising two sealing elements (160, 161) having an annular shape, said sealing elements (160, 161) being made of a low-friction material and being housed in the seat (116) in contact with the flow-diverting valve (150), wherein the surfaces of said sealing elements (160, 161) in contact with the flow-diverting valve (150) have a corresponding spherical shape.

4. A filtration device (100) according to claim 3, wherein the seat (116) is formed at the end of the inlet conduit (114) that is in fluid communication with the outlet conduit (115) and the cup-shaped container (130), and wherein the flow-diverting valve (150) is fitted into the main body (110) through the inlet conduit (114) and held in the seat (116) together with the sealing elements (160, 161) by way of a threaded ring (162).

5. A filtration device (100) according to any one of claims 2 to 4, further comprising an actuating lever (170) connected to the flow-diverting valve (150) through a shaft (171) fixed on its spherical body, wherein said shaft (171) is rotatably housed in a seat (117) formed in the main body (110) perpendicularly to the inlet conduit (114).

6. A filtration device (100) according to any one of claims 1 to 5, wherein the inlet conduit (114) and the outlet conduit (115) are perpendicular to each other.

7. A filtration device (100) according to any one of claims 1 to 6, wherein the cup-shaped container (130) houses a filter cartridge (120) having a generally cylindrical shape and wherein said filter cartridge (120) comprises a set of magnets (140) arranged coaxially thereto in a container (141) made of a plastic material.

## Patentansprüche

1. Eine Filter- und Schmutzabscheideanlage (100), umfassend:
i) einen Hauptkörper (110), in welchem eine zur Aufnahme eines in die Filter- und Schmutzabscheideanlage (100) einlaufenden Wasserstroms (F) vorgesehene Einlassleitung (114) ausgebildet ist, sowie eine zur Aufnahme eines die Filter- und Schmutzabscheideanlage (100) verlassenden Wasserstroms (F) vorgesehene Auslassleitung (115);
ii) einen becherförmigen Behälter (130), der an dem Hauptkörper (100) lösbar festgehalten ist, wobei der becherförmigen Behälter (130) einen Filtereinsatz (120) beherbergt;
iii) ein Verteilerventil (150), das im Inneren des Hauptkörpers (110) in einer Aufnahme (116) beweglich untergebracht ist, die in Strömungsverbindung mit der Einlassleitung (114), dem becherförmigen Behälter (130) und der Auslassleitung (115) steht, wobei das besagte Verteilerventil (150) ein Dreiwegeventil ist, das Kanäle (151, 152) umfasst, welche dazu eingerichtet sind, in Abhängigkeit von seiner Position in der besagten Aufnahme (116) die Einlassleitung (114) selektiv in Strömungsverbindung mit dem becherförmigen Behälter (130) oder mit der Auslassleitung (115) zu bringen,
iv) ein erstes Rückschlagventil (180), welches an demjenigen Ende der Auslassleitung (115) angeordnet ist, das strömungsmäßig mit dem becherförmigen Behälter (130) kommuniziert,
v) ein zweites Rückschlagventil (181), welches an demjenigen Ende der Auslassleitung (115) angeordnet ist, das dazu ausersehen ist, an eine hydraulische Vorrichtung angeschlossen zu werden,
**dadurch gekennzeichnet, dass** das Verteilerventil (150), das erste Rückschlagventil (180) und das zweite Rückschlagventil (181) derart angeordnet sind, dass folgende Betriebszustände definiert werden:
a) ein erster Betriebszustand der Filtration, wobei das Verteilerventil (150) eine Strömungsverbindung von der Einlassleitung (114) zur Auslassleitung (115) verhindert und eine Strömungsverbindung von der Elnlassleitung (114) in den becherförmigen Behälter (130) erlaubt, und wobei Flüssigkeit von der Einlassleitung (114) durch den becherförmigen Behälter (130), das erste Rückschlagventil (180), das zweite Rückschlagventil (181) und schließlich durch die Auslassleitung (115) fließt;
b) ein zweiter Betriebszustand der Überbrückung, wobei demgemäß das Verteilerventil (150) eine Strömungsverbindung zum becherförmigen Behälter (130) verhindert und eine Strömungsverbindung von der Einlassleitung (114) zur Auslassleitung (115) erlaubt, wobei Flüssigkeit von der Einlassleitung (114) durch das zweite Rückschlagventil (181) und die Auslassleitung (115) fließt, während das erste Rückschlagventil (180) die Flüssigkeit davon abhält, von dem Hauptkörper (110) in den becherförmigen Behälter (130) zu fließen;
c) ein dritter Betriebszustand der Schließung, wobei das Verteilerventil (150) eine Strömungsverbindung von der Einlassleitung (114) zum Hauptkörper (110) unterbindet, während das zweite Rückschlagventil (181) eine Strömungsverbindung von der Auslassleitung (115) zu dem Hauptkörper (110) verhindert.

2. Eine Filteranlage (100) gemäß Anspruch 1, wobei das Verteilerventil (150) ein Kugelventil ist, das im Inneren des Hauptkörpers (110) drehbar untergebracht ist, und wobei das besagte Kugelventil einen ersten, diametral verlaufenden Durchgangskanal (151) aufweist sowie einen zweiten Kanal (152), der an einem Ende, welches rechtwinklig von dem ersten Durchgangskanal (151) abzweigt, verschlossen ist.

3. Eine Filteranlage (100) gemäß Anspruch 2, ferner umfassend zwei Dichtungselemente (160, 161) von ringförmiger Gestalt, wobei die besagten Dichtungselemente (160, 161) aus einem reibungsarmen Material hergestellt sind und in der Aufnahme (116) untergebracht sind in Kontakt mit dem Verteilerventil (150), wobei die Oberflächen der besagten Dichtungselemente (160, 161), welche in Kontakt mit dem Verteilventil (150) stehen, eine entsprechende kugelförmige Gestalt aufweisen.

4. Eine Filteranlage (100) gemäß Anspruch 3, wobei die Aufnahme (116) an demjenigen Ende der Einlassleitung (114) ausgebildet ist, das mit der Auslassleitung (115) und dem becherförmigen Behälter (130) in Strömungsverbindung steht, und wobei das Verteilerventil (150) in den Hauptkörper (110) durch die Einlassleitung (114) hindurch eingesetzt ist und in der Aufnahme (116) zusammen mit den Dichtungselementen (160, 161) durch einen Gewindering (162) gehalten wird.

5. Eine Filteranlage (100) gemäß irgendeinem der Ansprüche 2 bis 4, ferner umfassend einen Betätigungshebel (170), der an dem Verteilventil (150) über einen an dessen kugelförmigem Körper befestigten Schaft (171) angeschlossen ist, wobei der besagte Schaft (171) in einer Aufnahme (117) drehbar untergebracht ist, die in dem Hauptkörper (110) rechtwinklig zu der Einlassleitung (114) ausgebildet ist.

6. Eine Filteranlage (100) gemäß irgendeinem der Ansprüche 1 bis 5, wobei die Einlassleitung (114) und die Auslassleitung (115) rechtwinklig zueinander sind.

7. Eine Filteranlage (100) gemäß irgendeinem der Ansprüche 1 bis 6, wobei der becherförmige Behälter (130) einen Filtereinsatz (120) mit einer im Allgemeinen zylinderförmigen Gestalt beherbergt, und wobei der besagte Filtereinsatz (120) einen Satz von Magneten (140) umfasst, die koaxial dazu in einem Behälter (141) aus Kunststoff angeordnet sind.

## Revendications

1. Dispositif de filtration et de séparation de saleté (100) comprenant :
i) un corps principal (110) dans lequel sont formés un conduit d'entrée (114) prévu pour recevoir un écoulement d'eau (F) entrant dans le dispositif de filtration et de séparation de saleté (100), et un conduit de sortie (115) prévu pour recevoir un écoulement d'eau (F) quittant le dispositif de filtration et de séparation (100) ;
ii) un récipient en forme de coupelle (130) qui est retenu, de manière amovible, sur ledit corps principal (110), ledit récipient en forme de coupelle (130) étant prévu pour loger une cartouche de filtre (120) ;
iii) une valve de déviation d'écoulement (150) qui est logée, de manière mobile, à l'intérieur du corps principal (110) dans un siège (116) qui est en communication de fluide avec ledit conduit d'entrée (114), ledit récipient en forme de coupelle (130) et ledit conduit de sortie (115), ladite valve de déviation d'écoulement (150) étant une valve à trois voies comprenant des canaux (151, 152) adaptés pour placer sélectivement le conduit d'entrée (114) en communication de fluide avec le récipient en forme de coupelle (130), ou avec le conduit de sortie (150) en fonction de sa position dans ledit siège (116),
iv) une première valve à une voie (180) qui est agencée à l'extrémité du conduit de sortie (115) qui communique de manière fluidique avec le récipient en forme de coupelle (130),
v) une seconde valve à une voie (181) qui est agencée à l'extrémité du conduit de sortie (115) qui est prévu pour être raccordé à un appareil hydraulique,
**caractérisé en ce que** la valve de déviation d'écoulement (150), la première valve à une voie (180) et la seconde valve à une voie (181) sont agencées de sorte que les conditions de fonctionnement suivantes sont définies :
a) une première condition de filtration, moyennant quoi la valve de déviation d'écoulement (150) empêche la communication fluidique du conduit d'entrée (114) au conduit de sortie (115) et permet la communication fluidique du conduit d'entrée (114) au récipient en forme de coupelle (130), et moyennant quoi le fluide s'écoule du conduit d'entrée (114) en passant par le récipient en forme de coupelle (130), la première valve à une voie (180), la seconde valve à une voie (181) et finalement par le conduit de sortie (115) ;
b) une deuxième condition de dérivation, moyennant quoi la valve de déviation d'écoulement (150) empêche la communication fluidique avec le récipient en forme de coupelle (130) et permet la communication fluidique du conduit d'entrée (114) au conduit de sortie (115), moyennant quoi le fluide s'écoule du conduit d'entrée (114) en passant par la seconde valve à une voie (181) et le conduit de sortie (115), alors que la première valve à une voie (180) empêche le fluide de s'écouler du corps principal (110) dans le récipient en forme de coupelle (130) ;
c) une troisième condition de fermeture, moyennant quoi la valve de déviation d'écoulement (150) empêche la communication fluidique du conduit d'entrée (114) avec le conduit principal (110), alors que la seconde valve de déviation d'écoulement (181) empêche la communication de fluide du conduit de sortie (115) au corps principal (110).

2. Dispositif de filtration (100) selon la revendication 1, dans lequel la valve de déviation d'écoulement (150) est une valve sphérique logée, en rotation, à l'intérieur du corps principal (110), et dans lequel ladite valve sphérique comprend un premier canal débouchant s'étendant de manière diamétrale (151) et un second canal (152) borgne à une extrémité qui bifurque perpendiculairement au premier canal débouchant (151).

3. Dispositif de filtration (100) selon la revendication 2, comprend en outre deux éléments d'étanchéité (160, 161) ayant une forme annulaire, lesdits éléments d'étanchéité (160, 161) étant réalisés à partir d'un matériau à faible frottement et étant logés dans le siège (116) en contact avec la valve de déviation d'écoulement (150), dans lequel les surfaces desdits éléments d'étanchéité (160, 161) en contact avec la valve de déviation d'écoulement (150) ont une forme sphérique correspondante.

4. Dispositif de filtration (100) selon la revendication 3, dans lequel le siège (116) est formé à l'extrémité du conduit d'entrée (114) qui est en communication fluidique avec le conduit de sortie (115) et le récipient en forme de coupelle (130), et dans lequel la valve de déviation d'écoulement (150) est ajustée dans le corps principal (110) à travers le conduit d'entrée (114) et maintenue dans le siège (116) conjointement avec les éléments d'étanchéité (160, 161) au moyen d'une bague filetée (162).

5. Dispositif de filtration (100) selon l'une quelconque des revendications 2 à 4, comprenant en outre un levier d'actionnement (170) raccordé à la valve de dérivation d'écoulement (150) par le biais d'un arbre (171) fixé sur son corps sphérique, dans lequel ledit arbre (171) est logé, en rotation, dans un siège (117) formé dans le corps principal (110) perpendiculairement au conduit d'entrée (114).

6. Dispositif de filtration (100) selon l'une quelconque des revendications 1 à 5, dans lequel le conduit d'entrée (114) et le conduit de sortie (115) sont perpendiculaires entre eux.

7. Dispositif de filtration (100) selon l'une quelconque des revendications 1 à 6, dans lequel le récipient en forme de coupelle (130) loge une cartouche de filtre (120) ayant une forme généralement cylindrique et dans lequel ladite cartouche de filtre (120) comprend un ensemble d'aimants (140) agencés de manière coaxiale à celle-ci dans un récipient (141) réalisé à partir d'une matière plastique.
